# EUROPÄISCHE PATENTSCHRIFT

(11) **EP 2 559 595 B1**
(45) Veröffentlichungstag und Bekanntmachung des Hinweises auf die Patenterteilung: **16.07.2014**
(21) Anmeldenummer: 12005486.1
(22) Anmeldetag: 27.07.2012
(51) Int. Cl.: B60R 7/06

(54) **Konsole**
Console
Console

(30) Priorität: 17.08.2011 DE 102011110859
(43) Veröffentlichungstag der Anmeldung: 20.02.2013
(73) Patentinhaber: KAMEI automotive GmbH, 38448 Wolfsburg (DE)
(72) Erfinder: Schulze, Dirk, 29378 Wittingen (DE)
(74) Vertreter: Friedrich, Andreas

(56) Entgegenhaltungen:
- DE-A1-102006 008 420
- JP-A- 2 117 450
- JP-A- 6 230 104
- JP-A- 59 006 137
- US-A- 4 577 788

## Beschreibung

Die Erfindung betrifft eine Konsole zum Anordnen eines Bediengerätes auf einem Armaturenbrett eines Kraftfahrzeugs, wobei die Konsole eine Einschuböffnung zum Einschieben des Bediengerätes und eine Oberschale aufweist, die einen Aufnahmeraum zumindest teilweise umgibt, der ausgebildet ist, das Bediengerät aufzunehmen, nachdem es in die Einschuböffnung eingeschoben wurde.

Derartige Konsolen, die auch als Hutzen oder Cockpit-Hutzen bezeichnet werden, sind heute aus dem Stand der Technik zur Genüge bekannt. Sie werden verwendet, um Bediengeräte, beispielsweise ein Funkgerät, Navigationssystem oder ein Gerät der Unterhaltungselektronik, beispielsweise ein CD- oder DVD-Player, das nicht serienmäßig im Kraftfahrzeug enthalten war, zusätzlich im Cockpit auf dem Armaturenbrett anzuordnen. In einer derartigen Hutze oder Konsole können auch beispielsweise lediglich Bedienelemente für Sonderausstattungselemente der Kraftfahrzeuge, beispielsweise Sondersignalanlagen bei Einsatzfahrzeugen, angeordnet werden. Diese müssen für den Fahrer des Kraftfahrzeugs einfach und schnell bedienbar im Cockpit des Fahrzeugs angeordnet werden.

Herkömmlicherweise weisen Kraftfahrzeuge im mittleren Bereich des Armaturenbrettes eine kleine Vertiefung oder Mulde auf, die beispielsweise als Staufach oder Ablagefläche genutzt werden kann. Auf diese Mulde werden die aus dem Stand der Technik bekannten Konsolen aufgesetzt. Es ist jedoch auch möglich, eine Konsole auf ein Armaturenbrett aufzusetzen, das keine Mulde aufweist. Eine derartige Konsole besteht im Wesentlichen aus einer aus einem relativ weichen Plastik bestehenden Oberschale, die an einer dem Innenraum des Fahrzeugs zugewandten Seite eine Einschuböffnung aufweist, in die das Bediengerät eingeschoben werden kann. Innerhalb dieser Oberschale ist zumeist ein Rahmen, beispielsweise ein DIN-Schacht, angeordnet, in dem das Bediengerät, nachdem es in die Einschuböffnung eingeführt wurde, aufgenommen ist.

Ein Problem bei herkömmlichen Konsolen oder Hutzen besteht darin, sie möglichst schnell und einfach auf dem Armaturenbrett des Fahrzeugs befestigen zu können und gleichzeitig eine große Stabilität und Sicherheit zu gewährleisten. Herkömmlicherweise werden dazu Verstärkungen und Verstrebungen in die Oberschale eingebracht, damit diese nicht unter dem Gewicht des in die Einschuböffnung eingebrachten Bediengerätes zusammensackt oder sich verformt. Die Befestigung am Armaturenbrett erfolgt zumeist über Schrauben, die in eigens dafür zu bohrende Löcher im Armaturenbrett eingesetzt werden müssen. Da beispielsweise der hintere Aufnahmeraum der Konsole innerhalb der Oberschale nur sehr schwer zugänglich ist, wenn diese auf das Armaturenbrett des Kraftfahrzeugs aufgesetzt ist, ist das Anordnen der Schrauben und insbesondere das Bohren der Löcher an dieser Stelle kompliziert und unhandlich. Zudem wird dadurch das Armaturenbrett beschädigt, wodurch ein spurenloser Rückbau der Konsole nicht mehr möglich ist. Sollen insbesondere Einsatzfahrzeuge, die mit einer derartigen Konsole oder Hutze ausgestattet sind, nach ihrer Dienstzeit als Gebrauchtwagen weiterverkauft werden, senken die im Armaturenbrett vorhandenen Löcher den Wiederverkaufswert drastisch.

Insbesondere bei Einsatzfahrzeugen, beispielsweise der Polizei, der Rettungs dienste oder der Feuerwehr, besteht aufgrund ihrer Sonderstellung im Straβenverkehr eine erhöhte Unfallgefahr. Um die Insassen hier zu schützen ist es wichtig, die Konsole zudem crash- und rollover-sicher auszugestalten. Auch dies ist mit einer herkömmlichen Konsole oder Hutze nur sehr schwer möglich.

Die DE 10 2006 008 420 A2 offenbart ein im Armaturenbrett des Kraftfahrzeugs angeordnetes Fach, das durch einen Deckel verschließbar ist. In diesem Fach ist ein Gerätehalter integriert, in dem ein Bediengerät angeordnet werden kann, das bei Bedarf in eine Gebrauchsstellung geschwenkt wird, bei der das Gerät für den Fahrer bedienbar ist.

Die DE 10 2009 039 143 A1 offenbart ein ebenfalls im Armaturenbrett des Kraftfahrzeugs liegendes Fach, das durch einen Schiebedeckel verschließbar ist. Für den Fall, dass in dem Fach ein Bediengerät positioniert wird, das während der Fahrt bedient werden soll, wird dieses zwischen dem Schiebedeckel und einer Seitenwand der Ausnehmung eingeklemmt.

Die JP 2117450 A offenbart eine Halterung für ein Autoradio, bei der das Radio vor ein Armaturenbrett gesetzt wird. Dazu wird zunächst eine Halterung an das Armaturenbrett angeschraubt, die einen Schlitz aufweist, in dem das Radio angeordnet wird. Die gesamte Anordnung wird anschließend von einer Abdeckung abgedeckt.

Die JP 6230104 A offenbart einen Koffer, in dem sich ein Navigationssystem befindet. Dieser umfasst eine GPS-Antenne, einen Monitor sowie Lautsprecher, und sonstige Bestandteile eines Navigationssystems.

Die JP 59006137 A offenbart eine Vorrichtung, mit der verhindert werden soll, dass sich der Rand eines Armaturenbrettes unter dem Einfluss äußerer Parameter verformt. Dazu wird der Rand mit einer Nut versehen, in die ein Abstandshalteelement eingesetzt wird.

Die US 4,577,788 A offenbart einen Behälter, der auf dem Armaturenbrett eines Kraftfahrzeuges angeschraubt wird, und der Schubladen und Ablagefächer für kleine Gegenstände, wie beispielsweise Zigaretten, Taschenrechner oder Stifte aufweist.

Der Erfindung liegt daher die Aufgabe zugrunde, eine gattungsgemäße Konsole vorzuschlagen, mit der ein Bediengerät einfach und schnell am Armaturenbrett eines Kraftfahrzeuges befestigt werden kann und die dennoch die erforderliche Stabilität und Sicherheit bietet.

Die Erfindung löst die gestellte Aufgabe durch eine gattungsgemäße Konsole, die sich dadurch auszeichnet, dass die Konsole ein Bodenteil aufweist, das ausgebildet ist, um mit einer Unterseite an dem Armaturenbrett anzuliegen, und wenigstens eine Auflagefläche umfasst, die derart geformt ist, dass das Bediengerät auf der wenigstens einen Auflagefläche aufliegt, nachdem es durch die Einschuböffnung eingeschoben wurde.

Anders als die herkömmlichen aus dem Stand der Technik bekannten Konsolen verfügt die erfindungsgemäße Konsole über ein Bodenteil. Dieses begrenzt den Aufnahmeraum, in den das Bediengerät eingeführt werden kann, nach un ten, also in Richtung auf das Armaturenbrett. Die Unterseite ist dabei derart geformt, dass sie in einer besonders bevorzugten Ausgestaltung der Form des Armaturenbretts folgt. Alternativ dazu können auch lediglich einige Auflagestellen vorgesehen sein, mit denen die Unterseite des Bodenteils am Armaturenbrett anliegen soll. Ein in eine derartige Konsole eingebrachtes Bediengerät liegt in einer bevorzugten Ausführungsform insbesondere im hinteren Bereich, also in dem Bereich, der der Einschuböffnung abgewandt ist, auf der wenigstens einen Auflagefläche des Bodenteils auf. Dadurch ist es nicht mehr nötig, dass beispielsweise ein DIN-Schacht vorgesehen sein muss, der für eine sichere Lagerung des eingeschobenen Bediengerätes sorgt. Zudem ist es nicht mehr nötig, dass das gesamte Gewicht des Schachtes inklusive des eingelegten Gerätes von der Oberschale getragen wird, da es nun auf dem Bodenteil aufliegen kann. Dadurch wird die Belastung der Oberschale deutlich reduziert, wodurch eine Verformung der Oberschale nicht mehr so leicht möglich ist, so dass hier weniger Material verwendet werden kann, da die benötigte Stabilität der Oberschale reduziert werden kann.

Vorteilhafterweise umfasst die Konsole wenigstens eine Halteeinrichtung, die ausgebildet ist, um in eine an dem Armaturenbrett vorgesehene Hinterschneidung einzugreifen. Bei vielen Fahrzeugen, die in der Mitte des Armaturenbrettes eine Vertiefung, Mulde oder ein Staufach aufweisen, weist dieses im hinteren Bereich eine Hinterschneidung auf. Die bedeutet, dass die Mulde oder Ablagefläche in diesem Bereich beispielsweise von einem der des Armaturenbrettes überdacht ist. Diese Hinterschneidung kann durchaus wenige Zentimeter oder auch nur wenige Millimeter tief sein.

Daher ist in einer bevorzugten Ausführungsform der Konsole die Halteeinrichtung in Form einer Stufe ausgebildet, die an einer der Einschuböffnung abgewandten Seite der Konsole angeordnet ist. Mit dieser Stufe kann die Konsole in diese Hinterschneidung eingreifen und so für eine noch stabilere Lagerung der Konsole am Armaturenbrett des Kraftfahrzeuges sorgen. Je tiefer die Hinterschneidung ist, desto weiter kann die Stufe eingreifen und desto stabiler ist die dadurch bewirkte Befestigung. Dadurch wird die Stabilität der Anordnung erhöht, ohne dass der Aufwand, der beim Einbau einer derartigen Konsole zu betreiben ist, erhöht würde. Es müssen keine zusätzlichen Befestigungsmittel beispielsweise in Form von zusätzlichen Schrauben vorgesehen werden, sondern die Konsole kann einfach in die Mulde oder die Form des Armaturenbrettes eingeschoben werden, bis die Stufe in der Hinterschneidung eingefügt ist.

Vorteilhafterweise ist diese Stufe einstückig mit der Oberschale ausgebildet. Auf diese Weise wird der Herstellungsaufwand für eine derartige Hutze oder Konsole reduziert, was auch die Herstellungskosten senkt.

Alternativ oder zusätzlich dazu weist die Konsole vorteilhafterweise wenigstens einen Vorsprung auf, der ausgebildet ist, um in einen an dem Armaturenbrett vorgesehenen Schlitz eingeführt zu werden. Dieser Schlitz kann beispielsweise zur Lüftungsanlage oder zu einer Lautsprecherabdeckung des Kraftfahrzeuges gehören. Dieser wenigstens eine Vorsprung ist vorteilhafterweise an der Unterseite des Bodenteils vorgesehen. Der Vorsprung wird in dafür im Armaturenbrett vorgesehene Schlitze eingeführt, wodurch die Stabilität der Anordnung weiter erhöht wird. Gleichzeitig ist ein Rückbau einer derartigen Anordnung spurenlos möglich, da das Armaturenbrett selbst dazu nicht beschädigt werden muss. Auch das Befestigen an sich ist auf eine besonders einfache Art und Weise möglich, da lediglich der Vorsprung eingeschoben werden muss. Es werden auch hier keine weiteren Befestigungsmittel in Form beispielsweise von einzusetzenden Schrauben, nötig.

Natürlich kann auch eine Konsole gemäß einem Ausführungsbeispiel der vorliegenden Erfindung durch zusätzliche Schrauben oder andere Befestigungsmittel am Armaturenbrett angeordnet werden, um für noch größere Stabilität und Sicherheit zu sorgen. Diese können jedoch aufgrund der insbesondere im hinteren Teil, also in dem Teil, der der Einschuböffnung abgewandt ist, vorgesehenen Befestigungselemente in Form der Halteeinrichtung oder des wenigstens einen Vorsprungs im vorderen Bereich, also in dem leicht zugänglichen Bereich der Einschuböffnung, vorgesehen sein. Dadurch wird die Montage deutlich vereinfacht.

Die Oberschale und das Bodenteil bestehen besonders bevorzugt aus einem Kunststoff. Auf diese Weise ist eine besonders einfache und kostengünstige Herstellung und Produktion einer derartigen Konsole möglich. Die Einzelteile können beispielsweise im Tiefzieh- oder im Spritzgussverfahren hergestellt werden und auf besonders einfache Weise miteinander verbunden werden. Dies kann beispielsweise durch einfaches Kleben oder durch Ultraschallschweißung geschehen. Bevorzugt umfasst die Konsole dann die Oberschale, in der in einer besonders bevorzugten Ausführungsform die Einschuböffnung vorgesehen sein kann, und das Bodenteil. Beide können über einen umlaufenden Rand miteinander verbunden werden, so dass auch hier eine ausreichende Stabilität und Sicherheit gewährleistet ist.

Um die Sicherheit insbesondere für die Insassen eines Kraftfahrzeuges, in dem eine derartige Konsole verbaut ist, insbesondere bei Unfällen und Überschlägen zu erhöhen, kann die Oberschale bevorzugt wenigstens einen Rand aufweisen, der durch ein in den Kunststoff eingebettetes Metallteil verstärkt ist. Dieser Rand befindet sich insbesondere oberhalb der Einschuböffnung, also an der Vorderseite der Konsole auf der dem Armaturenbrett abgewandten Seite. Das ist die Stelle, auf die beispielsweise bei einem Auffahrunfall der Kopf eines Insassen des Kraftfahrzeuges auftreffen könnte. Daher ist es wichtig, dass dieser Rand der Wucht eines derartigen Aufpralls standhält, um schwerwiegendere Verletzungen durch Splitter, scharfe Kanten oder das sich innerhalb der Konsole befindliche Bediengerät, wirksam zu vermeiden. Daher wird insbesondere dieser Rand durch das in den Kunststoff eingebettete Metallteil verstärkt. Dieses kann beispielsweise in Form eines Aluminiumstreifens vorliegen. Es ist auf diese Weise möglich, Crash- und Rollover-Sicherheit zu gewährleisten.

In einer besonders bevorzugten Ausführungsform ist an zumindest einer Kontaktfläche, die vorgesehen ist, um mit dem Armaturenbrett in Kontakt zu kommen, ein Klebestreifen vorgesehen. Dieser kann beispielsweise an den Kontaktflächen an der Unterseite des Bodenteils vorgesehen sein oder auch an den Stellen, an denen beispielsweise die Oberschale mit dem Armaturenbrett in Kontakt kommen soll. Dies ist insbesondere an der Vorderseite der Konsole, in der sich die Einschuböffnung befindet, unterhalb der Einschuböffnung der Fall. Wird hier ein Klebestreifen versehen, der beispielsweise mit einer Abdeckfolie abgedeckt ist, ist eine besonders einfache Montage der Konsole möglich, Dabei werden eventuell vorhandene Halteelemente oder Vorsprünge in Hinterschneidungen oder Schlitze des Armaturenbrettes eingeführt und anschließend die Konsole mittels des Klebestreifens am Armaturenbrett befestigt. Dazu wird zuvor die Abdeckfolie abgezogen. Auf diese Weise ist eine einfache, kostengünstige und rückstandsfrei zurückbaubare Befestigung einer derartigen Konsole am Armaturenbrett des Kraftfahrzeuges möglich.

Mit Hilfe einer Zeichnung wird nachfolgend ein Ausführungsbeispiel der vorliegenden Erfindung näher erläutert. Es zeigt
- Figur 1 -: eine schematische Frontansicht einer Konsole gemäß einem ersten Ausführungsbeispiel der vorliegenden Erfindung,
- Figur 2 -: einen Schnitt entlang der Linie II-II aus Figur 1,
- Figur 3 -: die Darstellung aus Figur 1 mit einem in die Konsole eingesetzten Bediengerät,
- Figur 4 -: einen Schnitt entlang der Linie IV-IV aus Figur 3,
- Figur 5 -: eine Frontansicht einer Konsole gemäß einem zweiten Ausführungsbeisplel der vorliegenden Erfindung,
- Figur 6 -: einen Schnitt entlang der Linie VI-VI aus Figur 5,
- Figur 7 -: die Darstellung aus Figur 5 mit einem in die Konsole eingesetzten Bediengerät und
- Figur 8 -: einen Schnitt entlang der Linie VIII-VIII aus Figur 7.

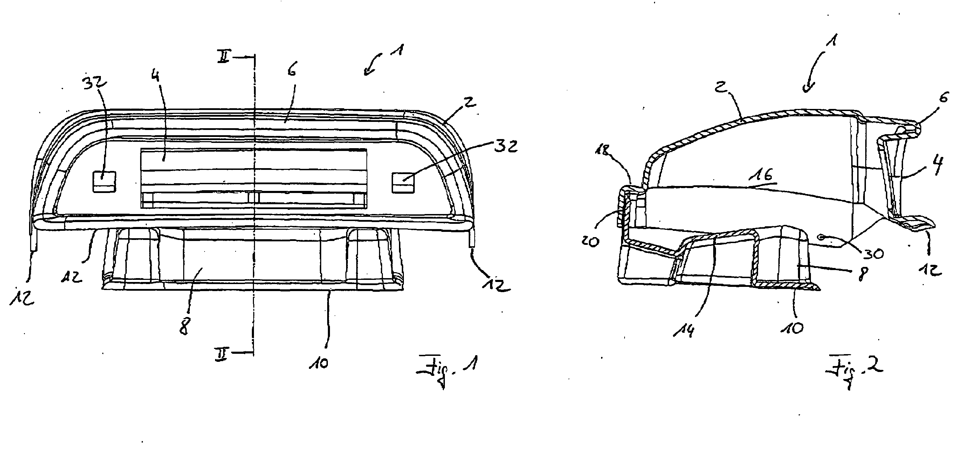

Figur 1 zeigt eine Frontansicht einer Konsole 1 gemäß einem Ausführungsbeispiel der vorliegenden Erfindung. Die Konsole 1 umfasst eine Oberschale 2, in der sich im gezeigten Ausführungsbeispiel eine Einschuböffnung 4 befindet. Oberhalb der Einschuböffnung 4 verfügt die Oberschale 2 über einen Rand 6, der in einem bevorzugten Ausführungsbeispiel besonders verstärkt ist. Sollte es in einem Fahrzeug, in dem eine derartige Konsole 1 verbaut ist, zu einem Auffahrunfall kommen, ist der Rand 6 die Stelle der Konsole, auf die beispielsweise ein Kopf eines Insassen des Kraftfahrzeuges aufschlagen kann. Daher ist in einer bevorzugten Ausführungsform dieser Rand 6 besonders verstärkt ausgebildet.

Unterhalb der Oberschale 2 ist in Figur 1 ein Bodenteil 8 zu erkennen. Dieses verfügt über eine Kontaktfläche 10, mit der es auf dem Armaturenbrett des Kraftfahrzeugs aufliegen soll. Daher folgt die Form der Unterseite des Bodenteils 8 in dem Bereich, in dem sich die Kontaktfläche 10 befindet, der Form des Armaturenbreets.

Auch die Oberschale 2 verfügt über eine Kontaktfläche 12, die im montierten Zustand der Konsole 1 am Armaturenbrett des Kraftfahrzeuges aufliegt. Dies ist insbesondere ein umlaufender unterer Rand der Oberschale sowie in einem Bereich unterhalb der Einschuböffnung 4 ein dort extra ausgebildeter Randbereich. Im Bereich dieser Kontaktflächen 10, 12 kann vorteilhafterweise ein in Figur 1 nicht gezeigter Klebestreifen vorgesehen sein, mit dem die Konsole 1 am Armaturenbrett befestigt werden kann.

Rechts und links der Einschuböffnung 4 sind zwei Ausnehmungen 32 vorgesehen, die Bedienelemente wie Schalter, Taster, Druck- oder Drehregler oder ähnliches aufnehmen können.

Figur 2 zeigt einen Schnitt entlang der Linie II-II aus Figur 1. Im rechten Bereich der Figur 2 ist deutlich der Rand 6 zu erkennen, der in diesem Fall wulstförmig über die Einschuböffnung 4 hinaussteht. Erst in der Schnittdarstellung der Figur 2 ist zu erkennen, dass das Bodenteil 8 über eine Auflagefläche 14 verfügt, die einen Aufnahmeraum 16 nach unten hin begrenzt. Ein Bediengerät, das durch die Einschuböffnung 4 in die Konsole 1 eingeschoben wird, kann in dem Aufnahmeraum 16 aufgenommen werden und liegt auf der Auflagefläche 14 auf.

Im hinteren Bereich der Konsole verfügt die Oberschale 2 über eine Halteeinrichtung 18, die im in Figur 2 gezeigten Ausführungsbeispiel in Form einer Stufe ausgebildet ist. Mit dieser Stufe in der Oberschale 2 kann die Konsole 1 in eine im Armaturenbrett befindliche Hinterschneidung eingreifen. Damit ist im hinteren Bereich der Konsole 1 beispielsweise ein Anheben nicht mehr möglich, so dass die Stabilität der Befestigung der Konsole 1 am Armaturenbrett deutlich erhöht wird. In einem Verbindungsbereich 20, der umlaufend ausgebildet sein kann, sind das Bodenteil 8 und die Oberschale 2 miteinander beispielsweise durch eine Verklebung oder Ultraschallschweißung miteinander verbunden.

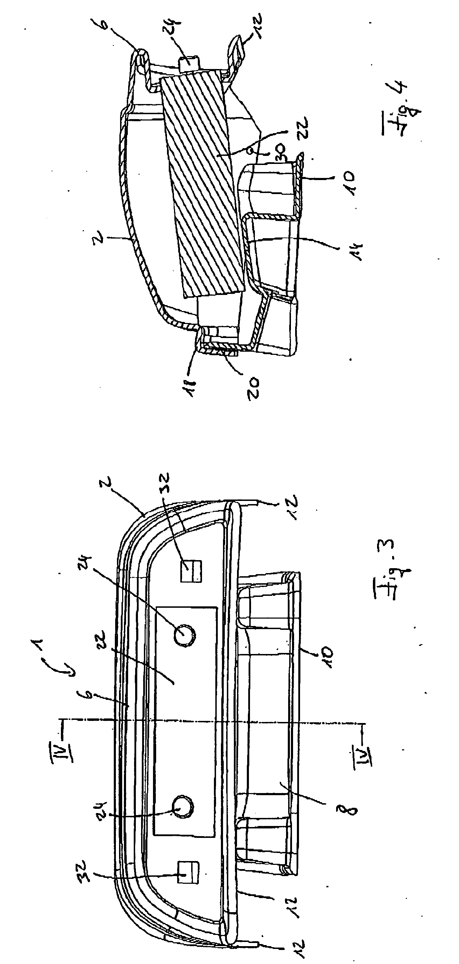

Figur 3 zeigt die in Figur 1 gezeigte Situation, wobei sich in der Einschuböffnung 4 nun ein Bediengerät 22 befindet. Dieses verfügt im in Figur 3 gezeigten Ausführungsbeispiel über zwei Drehknöpfe 24, kann jedoch natürlich auch jede andere Form von Bedienelementen aufweisen. Figur 4 zeigt den Schnitt entlang der Linie VI-VI in Figur 3. Man erkennt, dass das Bediengerät 22, das durch die Einschuböffnung 4 in den Aufnahmeraum 16 gelangt ist, im hinteren Bereich auf der Auflagefläche 14 aufliegt. Damit wird das Gewicht des Bediengerätes 22 vom Bodenteil 8 getragen und belastet somit nicht die Stabilität der Oberschale 2.

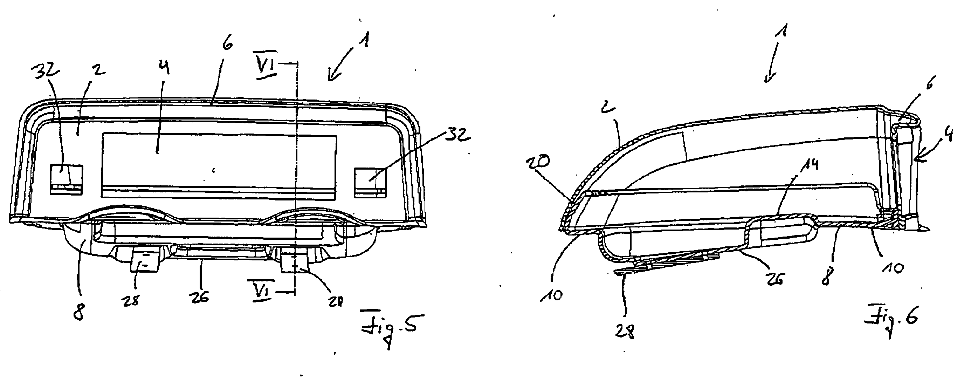

Figur 5 zeigt eine Frontansicht einer Konsole 1 gemäß einem anderen Ausführungsbeispiel der vorliegenden Erfindung. Auch diese Konsole 1 verfügt über eine Oberschale 2, in der sich die Einschuböffnung 4 befindet. Oberhalb der Einschuböffnung 4 ist wieder der Rand 6 dargestellt. Auch die in Figur 5 gezeigte Konsole 1 weist ein Bodenteil 8 auf, das im Vergleich zu dem in den Figuren 1 bis 4 gezeigten Ausführungsbeispiel jedoch nicht so weit nach unten über die Oberschale 2 hinausragt. Die in den Figuren 5 bis 8 gezeigte Konsole 1 ist somit für den Einbau in Kraftfahrzeuge bestimmt, die nicht über eine so tiefe Mulde im Armaturenbrett verfügen. Durch die Form des Bodenteils 8 kann die Form des Armaturenbrettes, mit dem die Konsole 1 verbunden werden soll, nachgebildet werden. Während das Armaturenbrett, für das die in den Figuren 1 bis 4 gezeigte Ausführungsform der Konsole 1 bestimmt war, eine deutliche Mulde aufweist, weist das Armaturenbrett, für das die Konsole 1 gemäß den Figuren 5 bis 8 bestimmt ist, nur eine geringe Vertiefung auf. Man erkennt jedoch an der Unterseite 26 des Bodenteils 8 in Figur 5 zwei Vorsprünge 28. Diese sind vorgesehen, um in Schlitze, die sich im Armaturenbrett des Kraftfahrzeuges befinden, eingeführt zu werden und so die Stabilität der Befestigung der Konsole 1 am Armaturenbrett zu erhöhen.

Figur 6 zeigt einen Schnitt entlang der Linie VI-VI aus Figur 5. Im Vergleich zur Figur 2 fällt auf, dass die Oberschale 2 im hinteren Bereich keine Halteeinrichtung aufweist, die in Form einer Stufe ausgebildet sein könnte. Dennoch ist in diesem Bereich der Verbindungsbereich 20 angeordnet, in dem die Oberschale 2 mit dem Bodenteil 8 verbunden ist. In der in Figur 6 gezeigten Ausführungsform einer Konsole 1 ist oberhalb der Einschuböffnung 4 wieder der Rand 6 ausgebildet, der um Unfallsicherheit herzustellen, verstärkt ausgebildet sein kann. Die Unterseite 26 des Bodenteils 8 weist in dem in Figur 6 gezeigten Ausführungsbeispiel zwei Kontaktflächen 10 auf, mit denen das Bodenteil 8 am Armaturenbrett anliegt. Die Kontaktflächen 10 sind im vorderen und im hinteren Bereich der Konsole 1 angeordnet. Dazwischen ist an der Unterseite 26 des Bodenteils 8 ein Vorsprung 28 gezeigt. Dieser ist in Form eines separaten Bauteils an der Unterseite 26 des Bodenteils 8 angeordnet. Natürlich kann er auch einstückig mit dem Bodenteil 8 ausgebildet sein. Wie bereits das in den anderen Figuren gezeigte Ausführungsbeispiel verfügt auch das Bodenteil 8 der Konsole 1 im in Figur 6 gezeigten Ausführungsbeispiel über eine Auflagefläche 14, auf der ein in die Konsole 1 eingeführtes Bediengerät 22 aufliegen kann.

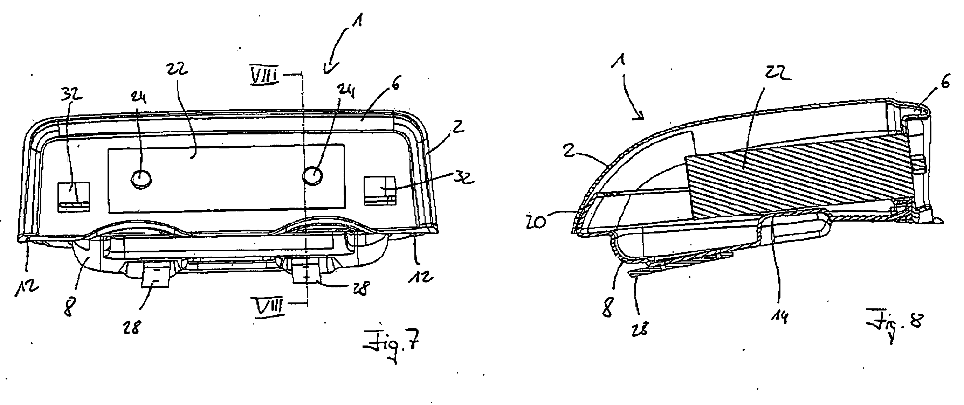

Diese Situation ist in Figur 7 und 8 gezeigt. Figur 7 zeigt die Ansicht aus Figur 5, mit dem Unterschied, dass sich in der Einschuböffnung 4 nun ein Bediengerät 22 befindet.

In Figur 8, die einen Schnitt entlang der Linie VIII-VIII aus Figur 7 darstellt, ist zu erkennen, dass das Bediengerät 22 an der Auflagefläche 14 des Bodenteils 8 der Konsole 1 anliegt.

Neben den gezeigten Ausführungsbeispielen sind auch Ausführungsbeispiele von Konsolen 1 vorstellbar, die sowohl über ein Halteelement 18, wie es beispielsweise in den Figuren 2 und 4 gezeigt ist, als auch über Vorsprünge 28 verfügt, wie sie in den Figuren 6 und 8 dargestellt sind. Damit kann die Stabilität der Befestigung der Konsole 1 am Armaturenbrett des Kraftfahrzeuges nochmals verstärkt werden, ohne dass der Einbau unnötig verkompliziert wird. In den Figuren 2 und 4 sind jedoch auch kleine Bohrungen 30 gezeigt, durch die beispielsweise Schrauben geführt werden können, um die Konsole 1 auch mit dem Armaturenbrett zu verschrauben. Dies ist jedoch lediglich optional vorgesehen. Eine Notwendigkeit für eine derartige Befestigung besteht nicht. Insbesondere wenn die Kontaktflächen 10, 12, mit denen die Konsole mit dem Armaturenbrett in Kontakt kommt, mit Klebestreifen oder ähnlichem rückstandsfrei ablösbaren Befestigungselementen versehen sind, erübrigen sich in vielen Anwendungsbereichen weitere Befestigungsmittel in Form von Schrauben oder ähnlichem, wodurch das Armaturenbrett beschädigt würde.

### Bezugszeichenliste

- 1: Konsole
- 2: Oberschale
- 4: Einschuböffnung
- 6: Rand
- 8: Bodenteil
- 10: Kontaktfläche
- 12: Kontaktfläche
- 14: Auflagefläche
- 16: Aufnahmeraum
- 18: Halteeinrichtung
- 20: Verbindungsbereich
- 22: Bediengerät
- 24: Drehknopf
- 26: Unterseite
- 28: Vorsprung
- 30: Bohrung
- 32: Ausnehmung

## Patentansprüche

1. Konsole (1) zum Anordnen eines Bediengerätes (22) auf einem Armaturenbrett eines Kraftfahrzeugs, wobei die Konsole (1) eine Einschuböffnung (4) zum Einschieben des Bediengeräts (22) und eine Oberschale (2) aufweist, die einen Aufnahmeraum (16) zumindest teilweise umgibt, der ausgebildet ist, das Bediengerät (22) aufzunehmen, nachdem es in die Einschuböffnung (4) eingeschoben wurde, **dadurch gekennzeichnet, dass** die Konsole (1) ein Bodenteil (8) aufweist, das ausgebildet ist, um mit einer Unterseite (26) an dem Armaturenbrett anzuliegen und wenigstens eine Auflagefläche (14) umfasst, die derart geformt ist, dass das Bediengerät (22) auf der wenigstens einen Auflagefläche (14) aufliegt, nachdem es durch die Einschuböffnung (4) eingeschoben wurde.

2. Konsole (1) nach Anspruch 1, **dadurch gekennzeichnet, dass** die Konsole (1) wenigstens eine Halteeinrichtung (18) aufweist, die ausgebildet ist, um in eine an dem Armaturenbrett vorgesehene Hinterschneidung einzugreifen.

3. Konsole (1) nach Anspruch 2, **dadurch gekennzeichnet, dass** die Halteeinrichtung (18) in Form einer Stufe ausgebildet ist, die an einer der Einschuböffnung (4) abgewandten Seite der Konsole (1) angeordnet ist.

4. Konsole (1) nach Anspruch 3, **dadurch gekennzeichnet, dass** die Stufe einstückig mit der Oberschale (2) ausgebildet ist.

5. Konsole (1) nach einem der vorstehenden Ansprüche, **dadurch gekennzeichnet, dass** die Konsole (1) wenigstens einen Vorsprung (28) aufweist, der ausgebildet ist, um in einen an dem Armaturenbrett vorgesehenen Schlitz eingeführt zu werden.

6. Konsole (1) nach Anspruch 5, **dadurch gekennzeichnet, dass** der wenigstens eine Vorsprung (28) an der Unterseite (26) des Bodenteils (8) vorgesehen ist.

7. Konsole (1) nach einem der vorstehenden Ansprüche, **dadurch gekennzeichnet, dass** die Oberschale (2) und das Bodenteil (8) aus einem Kunststoff bestehen.

8. Konsole (1) nach Anspruch 7, **dadurch gekennzeichnet, dass** die Oberschale (2) wenigstens einen Rand (6) aufweist, der durch ein in den Kunststoff eingebettetes Metallteil verstärkt ist.

9. Konsole (1) nach einem der vorstehenden Ansprüche, **dadurch gekennzeichnet, dass** an zumindest einer Kontaktfläche (10, 12), die vorgesehen ist, um mit dem Armaturenbrett in Kontakt zu kommen, ein Klebestreifen vorgesehen ist.

## Claims

1. Console (1) for arranging an operating device (22) on a dashboard of a motor vehicle, wherein the console (1) has a push-in opening (4) for the pushing-in of the operating device (22), and an upper shell (2) which at least partially surrounds a receiving space (16) which is designed to receive the operating device (22) after the latter has been pushed into the push-in opening (4), **characterized in that** the console (1) has a base part (8) which is designed in order to bear with a lower side (26) against the dashboard and comprises at least one supporting surface (14) which is shaped in such a manner that the operating device (22) rests on the at least one supporting surface (14) after said operating device has been pushed in through the push-in opening (4).

2. Console (1) according to Claim 1, **characterized in that** the console (1) has at least one retaining device (18) which is designed in order to engage in an undercut provided on the dashboard.

3. Console (1) according to Claim 2, **characterized in that** the retaining device (18) is designed in the form of a step which is arranged on a side of the console (1) that faces away from the push-in opening (4).

4. Console (1) according to Claim 3, **characterized in that** the step is formed integrally with the upper shell (2).

5. Console (1) according to one of the preceding claims, **characterized in that** the console (1) has at least one projection (28) which is designed in order to be introduced into a slot provided on the dashboard.

6. Console (1) according to Claim 5, **characterized in that** the at least one projection (28) is provided on the lower side (26) of the base part (8).

7. Console (1) according to one of the preceding claims, **characterized in that** the upper shell (2) and the base part (8) are composed of a plastic.

8. Console (1) according to Claim 7, **characterized in that** the upper shell (2) has at least one edge (6) which is reinforced by a metal part embedded into the plastic.

9. Console (1) according to one of the preceding claims, **characterized in that** an adhesive strip is provided on at least one contact surface (10, 12) which is provided in order to come into contact with the dashboard.

## Revendications

1. Console (1) pour l'agencement d'un appareil de commande (22) sur un tableau de bord d'un véhicule automobile, la console (1) présentant une ouverture d'insertion (4) pour l'insertion de l'appareil de commande (22) et une coque supérieure (2) qui entoure au moins en partie un espace de réception (16) qui est réalisé de manière à recevoir l'appareil de commande (22) après qu'il a été introduit dans l'ouverture d'insertion (4), **caractérisée en ce que** la console (1) présente une partie de fond (8) qui est réalisée de manière à s'appliquer contre le tableau de bord avec un côté inférieur (26) et qui comprend au moins une surface d'appui (14) qui est formée de telle sorte que l'appareil de commande (22) repose sur l'au moins une surface d'appui (14) après qu'il a été introduit à travers l'ouverture d'insertion (4).

2. Console (1) selon la revendication 1, **caractérisée en ce que** la console (1) présente au moins un dispositif de retenue (18) qui est réalisé de manière à s'engager dans une contre-dépouille prévue au niveau du tableau de bord.

3. Console (1) selon la revendication 2, **caractérisée en ce que** le dispositif de retenue (18) est réalisé en forme de gradin qui est disposé au niveau d'un côté de la console (1) opposé à l'ouverture d'insertion (4).

4. Console (1) selon la revendication 3, **caractérisée en ce que** le gradin est réalisé d'une seule pièce avec la coque supérieure (2).

5. Console (1) selon l'une quelconque des revendications précédentes, **caractérisée en ce que** la console (1) présente au moins une saillie (28) qui est réalisée de manière à être introduite dans une fente prévue au niveau du tableau de bord.

6. Console (1) selon la revendication 5, **caractérisée en ce que** l'au moins une saillie (28) est prévue au niveau du côté inférieur (26) de la partie de fond (8).

7. Console (1) selon l'une quelconque des revendications précédentes, **caractérisée en ce que** la coque supérieure (2) et la partie de fond (8) se composent de matière plastique.

8. Console (1) selon la revendication 7, **caractérisée en ce que** la coque supérieure (2) présente au moins un bord (6) qui est renforcé par une partie métallique noyée dans la matière plastique.

9. Console (1) selon l'une quelconque des revendications précédentes, **caractérisée en ce qu'**il est prévu, sur au moins une surface de contact (10, 12) destinée à venir en contact avec le tableau de bord, un ruban adhésif.
